Europäisches Patentamt

European Patent Office

Office européen des brevets

(11) Publication number: **0 354 888**
A1

## (12) EUROPEAN PATENT APPLICATION

(21) Application number: **89850235.6**

(22) Date of filing: **20.07.89**

(51) Int. Cl.⁵: **A 47 J 43/07**
**B 01 F 7/16**

(30) Priority: **12.08.88 SE 8802879**

(43) Date of publication of application:
**14.02.90 Bulletin 90/07**

(84) Designated Contracting States: **DE FR GB NL**

(71) Applicant: **NOVLAB INNOVATION AB**
**Box 7**
**S-260 24 Röstanga (SE)**

(72) Inventor: **Kempe. Robert**
**Stenbocksstigen 9**
**S-243 00 Höör (SE)**

(74) Representative: **MacFie, W.R. et al**
**Albihn West AB Box 142**
**S-401 22 Göteborg (SE)**

(54) A stirrer for a cooking vessel.

(57) A stirrer for a cooking vessel comprises an outer and an inner frame (13, 15), driven by an angular gearing (12) of the differential type. Concentric shafts (20, 25) extending from the gearing are connectable to the frames, the outer (20) of the concentric shafts driving the outer frame (13), while coupling means (26) optionally connects the inner frame either to the inner shaft (25) or to the outer shaft (20). The frames may thus be made to rotate in opposite directions or in the same direction.

FIG. 2

## Description

### A stirrer for a cooking vessel

Cooking vessels in catering kitchens are used for the preparation of a number of different kinds of foods, and the requirements upon the stirrer used in such vessels are severe. On the one hand a smooth working of the content in the vessel i desired, and on the other hand different ingrediences will require different stirring intensity. The latter may, to some extent, be obtained by varying the rotational speed of the stirrer.

A considerable improvement may according to the invention be obtained if the stirrer comprises a wing with two rotatable frames, which are connectable to a driving device in such a manner, that the frames may be made to rotate in the same directions, or alternatively in opposite directions.

The driving device is an angular gearing, and the invention is characterized by the angular gearing being of the differential type having two concentric output shafts, and by the wing comprising an outer and an inner frame, individually connectably to the output shafts.

The invention will below be described with reference to the accompanying drawings, in which

Fig. 1 shows a stirrer according to the invention,

Fig. 2 on a langer scale, schematically show the angular gearing and the connecting means thereat, and

Fig. 3 shows a section along line III-III in Fig. 2.

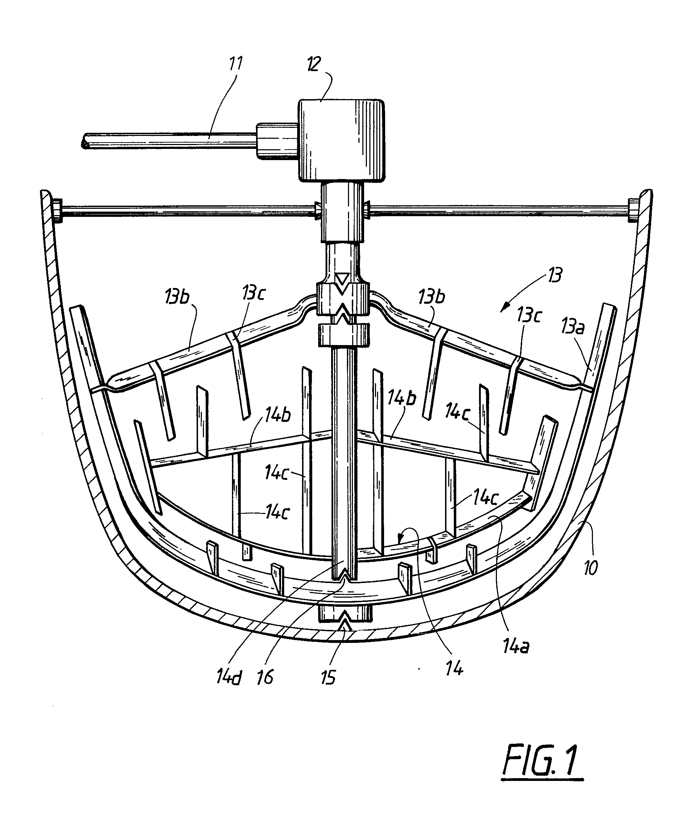

In Fig. 1 the wall of a catering kitchen cooking vessel is denoted by 10. The vessel may be of arbitray known type, to be heated for instance by means of a double wall containing heat transporting fluid.

The vessel is preferably tiltably supported, and carries an electric motor driving the stirrer. By means of a clutch (not shown) the motor may be connected to a shaft 11 extending into the casing of an angular gearing 12. This is carried by means of suitable support arms and clutches from the upper rim of the vessel.

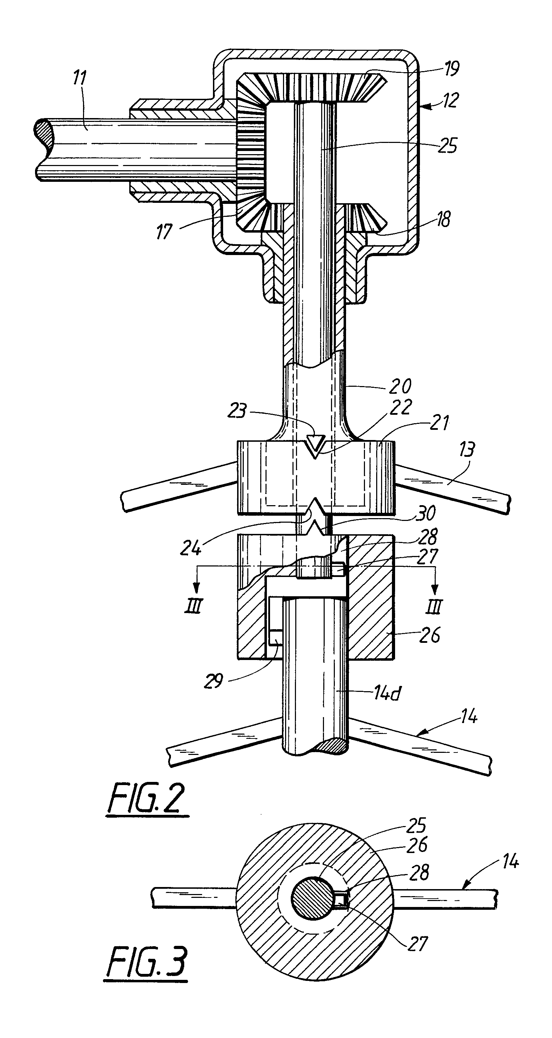

The angular gearing, which will be described more in detail herebelow, in connection with Fig. 2, drives a stirrer wing containing an outer and an inner frame, 13 and 14, respectively.

The outer frame 13 comprises an arched bar 13a, having substantially the same shape as the inner wall of the vessel, two arms 13b, and a number of vertical studs 13c. The outer frame 13 is carried by a conical trunnion 15 at the bottom of the vessel.

The inner frame 14 comprises an arched bar 14a fitting into the bar 13a of the outer frame, two arms 14b, a number of vertical studs 14c, and a vertical post 14d. The inner frame is carried by a trunnion mounted upon the upward face of the arched bar 13a of the outer frame.

The components of the frames are preferably formed as plates of strips being angularly mounted with respect to direction of movement, for better working of the content of the vessel.

The angular gearing 12 is easily separable from the stirrer, the extending shafts being adapted to be pushed into the frames and retained thereat by clutches.

As is best evident from Fig. 2 the angular gearing 12 is of the differential type, where the input shaft 11 carries a bevel gear wheel 17, meshing with two bevel gear wheels 18 and 19 respectively.

Gear wheel 18 is mounted upon a tubular shaft 20, and is adapted for connection with the outer frame 13. The hub 21 thereof is provided with an upwardly open notch 22, into which an external wedge 23 at the tubular shaft will enter, when the angular gearing is lowered onto the frames. The hub 21 is further provided with a downwardly open notch 24.

The bevel gear wheel 19 is mounted upon a shaft 25 which extends through the tubular shaft 20, and is intended in the first hand to operate the inner frame 14. The hub 26 thereof is movable up and down, and encloses the juxtaposed ends of the shaft 25 and the vertical post 14d.

The shaft 25 is provided with a sidewardly directed key 27, which fits into a groove 28 in the hub 26. In the position shown in Fig. 2 the key will hold the inner frame 14 rotating together with shaft 25. Due to the design of the differential gearing the shafts 20 and 25 will rotate in opposite directions, which means that the frames 13 and 14 will also rotate in opposite directions.

The hub 26 is, as mentioned above, movable vertically, and may be brought into engagement with the vertical post 14d by way of a key 29. The hub 26 is further, at its upper face provided with an upwardly directed wedge 30, intended to engage the lower notch 24 at the hub 21 of the outer frame 13.

When the hub 26 of the inner frame 14 is moved upwards from the position shown in Fig. 2 the wedge 30 will engage notch 24, while simultaneously the key 27 at shaft 25 will be brought out of engagement with groove 28, and may rotate freely in the space above the vertical post 14d. On this occasion both frames 13 and 14 will rotate in the same direction.

It should be mentioned, that the connecting arrangements are very simplified, and are only intended to explain the desired functions. In practical embodiments safer engagements must evidently be used and secured. With respect to the movable hub 26 this must be locked in its alternative ponsitions.

When frames 13 and 14 rotate in the same directions the coupling device is preferably adapted to hold the frames transversely to each other. Further modifications may be made within the scope of the appended claims. The shape and the size of the frames will evidently have to be formed to fit into the vessel, where they are intended to operate.

**Claims**

1. A stirrer for a cooking vessel comprising an angular gearing (12) mounted above the vessel, as well as a stirrer wing (13, 14) driven by the gearing **characterized** by the angular bearing (12) being of the differential type having two concentric output shafts (20, 25) and by the wing comprising an outer and an inner frame (13 and 14, respectively), each individually connectable to the output shafts.

2. A stirrer accortding to claim 1 **characterized** by coupling means (20) at the inner frame (14) permitting optional connection to the inner driving shaft (25), or to the outer driving shaft (20), respectively.

_FIG.1_

_FIG.2_

_FIG.3_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-465827 (SOC. MONNIER ET DESJARDIN)<br>* the whole document * | 1, 2 | A47J43/07<br>B01F7/16 |
| A | CH-A-390493 (KESSLER)<br>* the whole document * | 1, 2 | |

TECHNICAL FIELDS SEARCHED (Int. Cl.5)

A47J
B01F

The present search report has been drawn up for all claims

| Place of search | Date of completion of the search | Examiner |
|---|---|---|
| THE HAGUE | 15 NOVEMBER 1989 | MEINDERS H. |

EPO FORM 1503 03.82 (P0401)